# EUROPEAN PATENT APPLICATION

(11) **EP 4 686 439 A1**
(43) Date of publication of application: **04.02.2026**
(21) Application number: 25191915.5
(22) Date of filing: 25.07.2025
(51) Int. Cl.: A47J 31/54, F24H 1/16

(54) **HEATING DEVICE FOR MACHINES FOR DISPENSING HOT BEVERAGES, MACHINE FOR DISPENSING HOT BEVERAGES USING SAID HEATING DEVICE, AND METHOD FOR SIMULTANEOUSLY DISPENSING HOT BEVERAGES BY MEANS OF SAID MACHINE**

(30) Priority: 01.08.2024 IT 202400017983
(71) Applicant: Cimbali Group S.p.A., 20082 Binasco (MI) (IT)
(72) Inventor: Dameno, Marco, 20082 Binasco MI (IT); Larva, Luigi, 20082 Binasco MI (IT)
(74) Representative: Perani & Partners S.p.A.

(57) **Abstract**

Heating device (1) for a machine (100) for dispensing hot beverages, configured to heat a first and a second fluid flow (F1, F2) which are distinct. This heating device (1) comprises:
- a main body (2) defining a heating chamber (20);
- a supply duct (3) extending in the heating chamber (20) along an axial direction (A-A) and provided with a plurality of supply openings (30) distributed along the axial direction (A-A), said supply duct (3) is configured to supply in the heating chamber (20) a heating flow (F3) radially to the axial direction (A-A) through the supply openings (30);
- a first tubular circuit (4), configured to convey the first fluid flow (F1) to be heated, provided with a first helical section (40) extending in the heating chamber (20) around the axial direction (A-A) creating first coils (41) surrounding the supply duct (3);
- a second tubular circuit (5), configured to convey the second fluid flow (F2) to be heated, provided with a second helical section (50) extending in the heating chamber (20) around the axial direction (A-A) creating second coils (51) surrounding the supply duct (3),
wherein the second helical section (50) is coaxial with the first helical section (4), and the first and second coils (41, 51) are alternated along the axial direction (A-A).

## Description

### Technical Field

The present invention relates to a device for heating fluids, in particular liquids or mixtures of liquids with aeriforms, which finds useful use in machines for dispensing hot beverages such as, for example, traditional or super-automatic coffee machines.

The present invention also relates to a machine for dispensing hot beverages, in particular adapted to dispense at least two hot beverages simultaneously, which is useful for use in bars, restaurants, canteens and similar public or private establishments.

The present invention also relates to a method for the simultaneous dispensing of at least two hot beverages by using the aforesaid machine.

### State of the art

In the state of the art, various devices are known for heating fluids that can be used in machines for dispensing hot beverages to heat a liquid flow (e.g. milk, water, tea, chocolate and various infusions) or a liquid/air mixture (e.g. frothed milk).

For example, document EP3275349B1 discloses a device for continuously heating fluids by using water vapour supplied by a vapour source.

However, it should be noted that the device described in EP3275349B1 allows a single fluid to be heated and, therefore, it does not permit to meet the increasingly insistent demands from operators in the sector to be able to heat two or more fluid flows simultaneously.

This need arises mainly from the growing demand for plant-based beverages (e.g. soy milk, rice, almond and oats) as an alternative to traditional animal milk, both for reasons of digestibility and ethical choices or simply for the search for healthier and more sustainable alternatives.

There is therefore a need for operators in the sector to have available equipment capable of treating not only traditional milk of animal origin but also vegetable beverages.

In general, the operators in the sector feel the need to be able to take advantage of devices capable of heating, even simultaneously, two fluids without them mixing and contaminating each other.

To meet these needs, machines having with two distinct hydraulic circuits, each having a respective heating device, have been developed. An example of such machines is described in document US6192785B1.

Such machines, although they allow two distinct hot beverages to be dispensed, are particularly complex and expensive as they require the implementation of two independent circuits that work in parallel.

Furthermore, due to physical space limitations, this solution cannot be implemented in machines already on the market which, therefore, cannot be updated in order to meet the aforementioned new market demands.

### Object of the invention

In this context, the technical task underlying the present invention is to propose a heating device, a machine for dispensing hot beverages, and a method for using the latter that overcome the drawbacks of the prior art mentioned above.

In particular, an object of the present invention is to make available a heating device for a machine for dispensing hot beverages capable of heating two distinct fluids without any type of interference, i.e. without these mixing and contaminating each other.

A further object of the present invention is to make available a heating device that can be installed in machines for dispensing hot beverages already on the market to adapt them to the new market needs, i.e. to obtain the independent and possibly simultaneous dispensing of two hot fluids such as, for example, milk of animal and vegetable origin.

It is also an object of the present invention to make available a heating device for a machine for dispensing hot beverages capable of treating two fluids separately which is at the same time compact and of simple and economical construction.

Furthermore, it is an object of the present invention to make available a machine for dispensing at least two distinct hot beverages - such as, for example, a coffee machine - which is of simple and economical construction.

It is also an object of the present invention to make available a method for the simultaneous dispensing of two distinct hot beverages at respective predetermined dispensing temperatures by means of the aforesaid machine.

### SUMMARY OF THE INVENTION

The technical task mentioned and the objects specified are essentially achieved by a heating device, a machine for dispensing hot beverages, and a method for using the latter in accordance with the present invention.

In particular, the present invention proposes to provide a heating device for a machine for dispensing hot beverages provided with two distinct tubular circuits configured to convey respective fluid flows. These tubular circuits have helical sections arranged inside a heating chamber around a supply duct configured to radially release a heating flow on the tubular circuits.

The helical sections of the two tubular circuits are coaxial and have their respective alternated coils in an axial direction along which the supply conduit extends.

It should be noted that this arrangement and conformation of the tubular circuits allows the heating flow radially dispensed by the supply duct to invert both tubular circuits, thus preventing one of these screens from affecting the heating of one of the two fluids to be heated.

This heating device, in addition to being compact and of simple and economical construction, makes it possible to efficiently heat two fluid flows in a single device, even simultaneously, keeping them distinct.

The compactness of this heating device makes it easy to install in machines already on the market, so as to be able to adapt them to the new needs of obtaining the independent delivery of two hot fluids.

The integration of the heating device in a machine for dispensing hot beverages so as to be supplied by a steam generation unit and connected to two distinct hydraulic lines supplied by respective fluid sources, allows to put on the market machines for dispensing at least two distinct hot beverages which, in addition to being compact, are of simple and economical construction. In this regard, it should be noted that such machines comprise a single heating device that can be used to heat both fluids to be dispensed. Therefore, unlike known machines, the machine for dispensing hot beverages object of the present invention does not require a heater for each hydraulic line.

The present invention further proposes to provide a method for the simultaneous dispensing of two hot beverages obtained from respective fluid flows independently treated by the aforesaid machine. This method therefore allows the simultaneous dispensing of separate hot beverages subjected to a different heat treatment, for example, due to their different composition.

### LIST OF FIGURES

Further features and advantages of the present invention will become clearer from the indicative, and therefore non-limiting, description of a heating device and a machine for dispensing hot beverages as illustrated in the appended drawings, in which:
- Figure 1 shows a partially sectional perspective view of a fluid heating device according to the present invention;
- Figure 2 shows a sectional perspective view of a detail of the fluid heating device of Figure 1;
- Figure 3a shows a sectional side view of the device of Figure 1;
- Figure 3b shows an enlargement of a first detail of Figure 3a;
- Figure 3c shows an enlargement of a second detail of Figure 3 a;
- Figure 4a shows a perspective view of some components of the device of Figure 1;
- Figure 4b shows an exploded view of the components of Figure 4a;
- Figure 5a shows a schematic representation of a first embodiment of a machine for dispensing hot beverages according to the present invention;
- Figure 5b shows an enlargement of some components of the machine of Figure 5a;
- Figure 6a shows a schematic representation of a second embodiment of the machine for dispensing hot beverages according to the present invention;
- Figure 6b shows an enlargement of some components of the machine of Figure 6a.

### DETAILED DESCRIPTION

With reference to the attached figures, the present invention relates to a heating device 1, configured to receive and heat - for example, by condensation of a flow of vapour - a first fluid flow F1 and a second fluid flow F2.

It should be noted that in the context of the present document, the term "*fluid*" is intended to indicate both liquids such as, for example, milk, water, tea, and infusions and liquid/air mixtures such as, for example, frothed milk.

The first and second fluid flows F1, F2 may be indifferently formed with the same or different fluids. However, preferably, the first fluid flow F1 is made with milk of animal origin, while the second fluid flow F2 is made with a vegetable beverage such as, for example, soy, an infusion, or simply water.

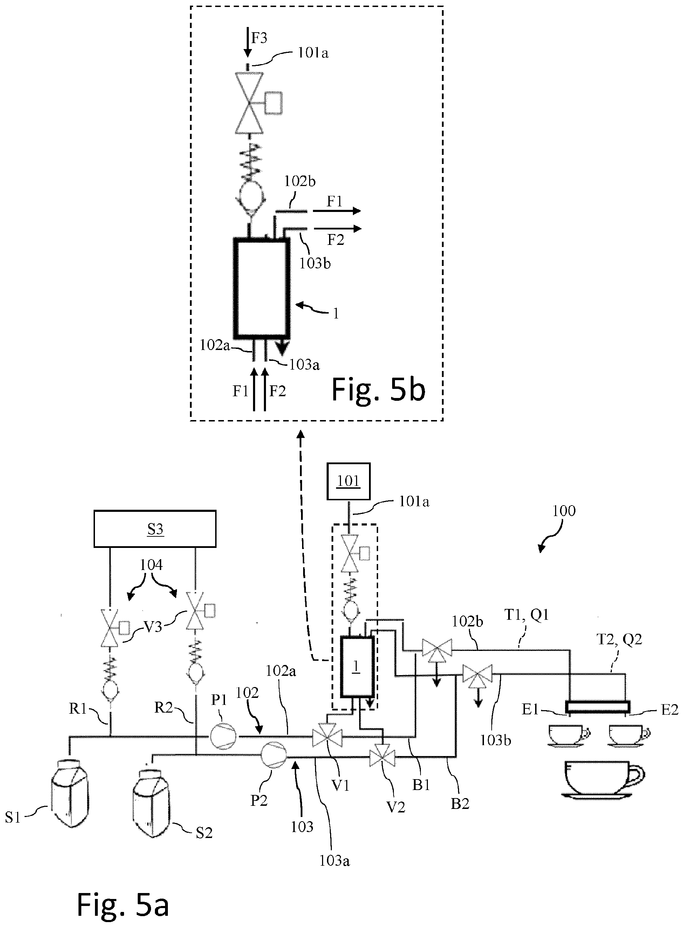

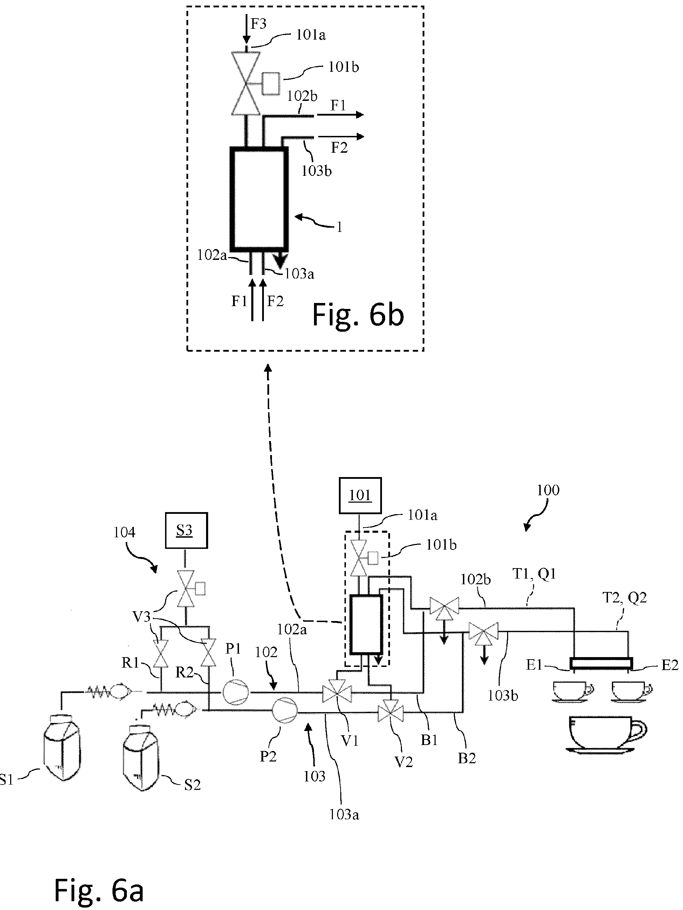

As shown in Figures 5a and 6a, the heating device 1 is configured to be installed in a machine 100 for dispensing hot beverages, preferably in a traditional or super-automatic coffee machine.

In the context of the present invention, "*hot beverages*" are intended to mean all those beverages dispensed/prepared/served at a temperature higher than room temperature such as, for example, hot milk (frothed or not), chocolate, tea, herbal teas and infusions in general. In particular, according to one aspect, in the context of the present invention "*hot beverages*" are to be considered all those beverages that are dispensed/prepared/served at temperatures above 40 °C.

Therefore, in the context of the present invention, hot beverages are both beverages obtained directly by heating a fluid (e.g. hot milk) and those derived from a heated fluid, for example, by infusion processes (e.g. tea and herbal teas).

The heating device 1 preferably performs continuous heating of fluids, i.e. it heats the first and second fluid flows F1, F2 while they are flowing in what will hereinafter be defined as the first and second tubular circuits 4, 5. In other words, the heating device 1 does not stop the fluids of the first and second fluid flows F1, F2 to heat them.

It should be specified that the heating device 1, depending on what is supplied in input, can heat both simultaneously and individually the first and/or second fluid flow F1, F2. More details in this regard will be provided in a subsequent part of the description.

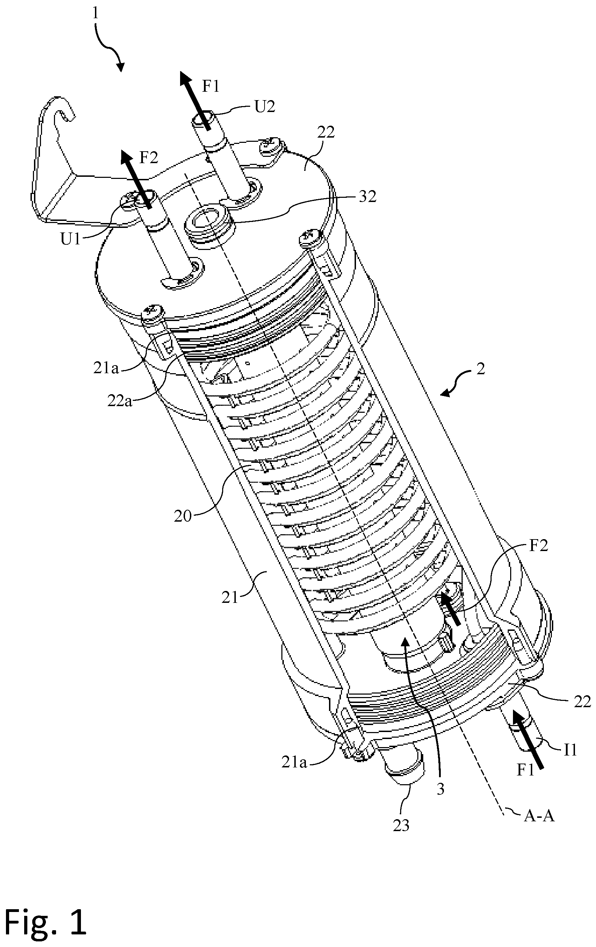

With reference to Figure 1, the heating device 1 comprises a main body 1 defining a heating chamber 20, i.e. a chamber inside which heat exchange phenomena occur which are aimed at increasing the temperature of the first and second fluid flows F1, F2. The main body 2 is therefore hollow and its internal portion (i.e. cavity) identifies the heating chamber 20.

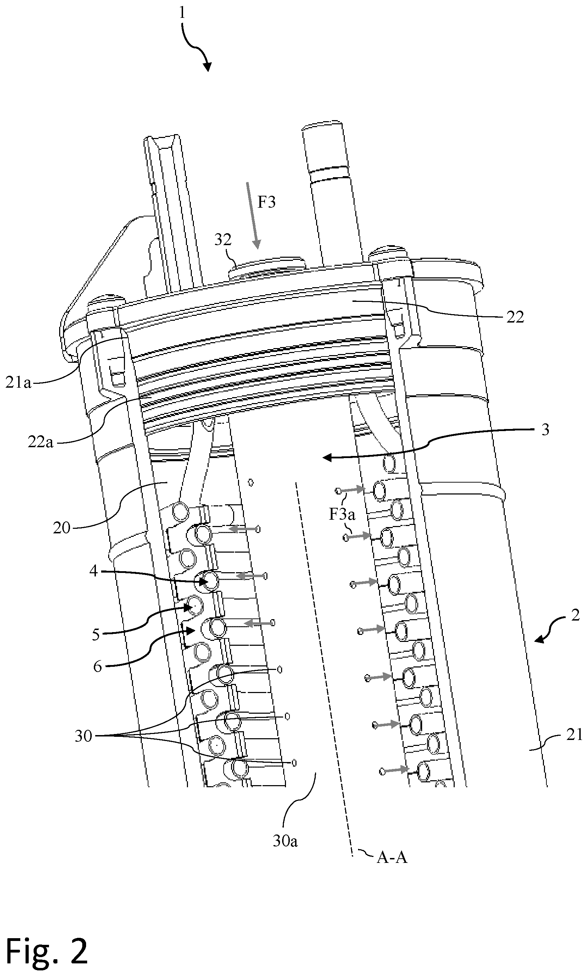

In detail, in the embodiment shown in Figures 1 and 2, the main body 2 has an axial symmetrical conformation, in particular cylindrical, extending around an axial direction A-A.

According to one aspect, the main body 2 comprises a hollow tubular body 21 extending along the axial direction A-A between two opposite open ends 21a, and two closure caps 22 removably mounted on a respective end 21a of the hollow tubular body 21. Preferably, each closure cap 22 is provided with a respective sealing gasket 22a configured to make a hermetic connection between the closure cap 22 and the hollow tubular body 21.

The supply device 3 further comprises a supply duct 3 extending in the heating chamber 20 along the axial direction A-A and configured to supply therein a heating flow F3 such as, for example, water vapour. In use, the supply duct 3 is then used to supply thermal power inside the heating chamber 20 which, as shown below, is transferred to the first and second flows F1, F2 to raise the temperature thereof.

In particular, according to one aspect, the supply duct 3 extends mainly along the axial direction A-A and is arranged coaxially with the main body 2 (i.e. the axial direction A-A identifies the axis around which both the main body 2 and the supply duct 3 extend symmetrically). Preferably, the main body 2 and the supply conduit 3 have a hollow cylindrical geometry and are arranged coaxially.

This supply duct 3 is provided with a plurality of supply openings 30 distributed along - and, preferably, also around - the axial direction A-A.

According to one aspect, the supply openings 30 are homogeneously distributed on the supply duct 3. In particular, in the embodiment of Figure 2, the plurality of supply openings 30 are arranged in arrays of supply openings 30 aligned along the axial direction A-A, and arranged on the supply duct 3 at different angular positions around the axial direction A-A.

Advantageously, such a homogeneous distribution of the holes allows to evenly distribute the heat supplied through the heating flow in the heating chamber 20, thus ensuring the thermal stability of the heating device 1.

It should be specified that the supply duct 3 has a wall 30a which, extending around the axial direction A-A, defines an internal channel 30b. The supply openings 30 are pass-through opening, so as to put the internal channel 30b of the supply duct in fluid communication with the surrounding heating chamber 20.

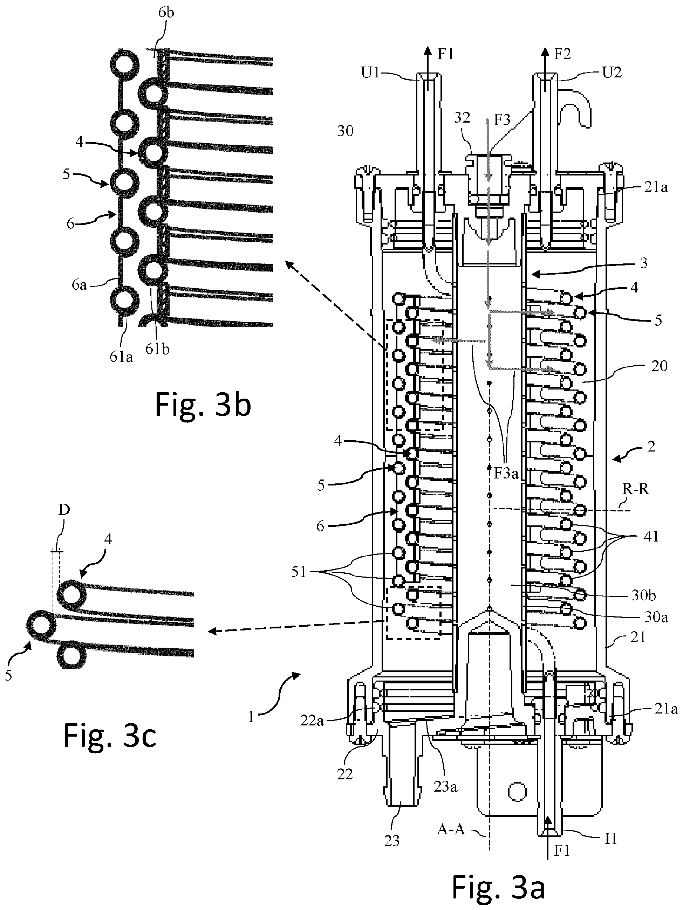

As shown in Figures 2 and 3a, in use, the supply duct 3 supplies into the heating chamber the heating flow F3 radially to the axial direction A-A through the supply openings 30. This means that, in use, the heating flow F3 flowing within the supply duct 3 along the axial direction A-A branches into a plurality of heating jets F3a that leave it radially in the axial direction A-A through respective supply openings 30.

The supply openings 30 may have different geometries and/or dimensions, however, preferably, they have a circular section with a diameter comprised between 0.5 mm and 1. 5mm, in particular 1mm.

According to one aspect, the supply duct 3 extends along the axial direction A-A between the two opposite closure caps 22 of the main body 2, on which it is removably mounted.

In the embodiment of Figure 1, the supply duct 3 comprises an inlet shank 32 through one of the two closure caps 22 and configured to be placed in fluid communication with a source of the heating flow F3 such as, for example, a steam generation unit 101.

It should be specified that, if the heating flow F3 is water vapour, the main body 2 is provided with a condensate drain opening 23 which, in use, is formed in the heating chamber 20. In the embodiment of Figure 1, the drain opening 23 is arranged on the closure cap 22 opposite to the one on which the inlet shank 32 of the supply duct 3 is mounted.

It should be noted that it is particularly advantageous to arrange the drain opening 23 in a lower portion of the main body 2 so that evacuation of the condensate occurs naturally due to the force of gravity. As shown in Figure 3a, preferably, the main body 2 has an inclined bottom 23a for guiding the condensate towards the drain opening 23.

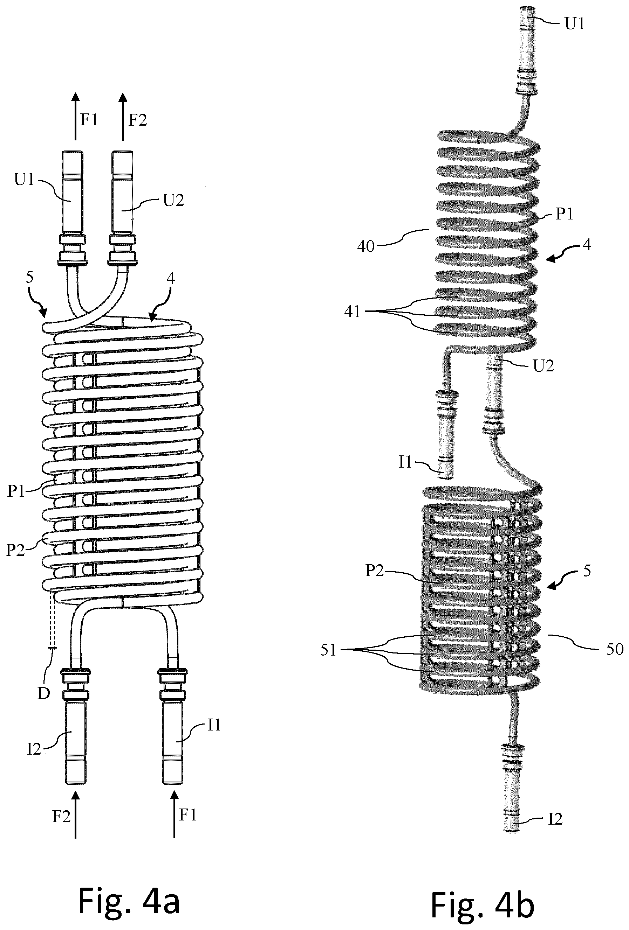

With reference to figures 4a and 4b, the heating device 1 also comprises a first tubular circuit 4 and a second tubular circuit 5 respectively configured to convey the first and the second flow F1, F2 to be heated.

In particular, again with reference to Figures 4a and 4b, the first tubular circuit 4 extends inside the heating chamber 20 along a first path P1 from a first inlet I1, through which the first fluid flow F1 is supplied to the heating device 1, to a first outlet U1, through which the first fluid flow F1 leaves the heating device 1 after being heated therein.

Similarly to the first tubular circuit 4, the second tubular circuit 5 extends inside the heating chamber 20 along a second path P2 from a second inlet I2, through which the second fluid flow F2 is supplied to the heating device 1, to a second outlet U2, through which the second fluid flow F2 leaves the heating device 1 after being heated therein.

It should be specified that the first and second tubular circuits 4, 5 are two distinct hydraulic circuits and, therefore, the flows flowing in them do not contaminate each other, mutually mixing.

It should also be specified that the inlets I1, I2 and the outlets U1, U2 of the first and second tubular circuits 4, 5 can have the arrangement shown in Figures 4a and 4b or inverted. That is to say that the first and second fluid flows F1, F2 may traverse the first and second tubular circuit 4, 5 both equidistantly and countercurrently. It should be pointed out that the expulsion of any condensate generated by the heating flow F3 in the heating chamber 20 preferably takes place by gravity regardless of the organization of the inlets I1, I2 and the outlets U1, U2 of the first and second tubular circuit 4, 5 and, therefore, regardless of the reciprocal motion of the first and second fluid flow F1, F2.

As shown in figures 2 and 3a, the first and second tubular circuit 4, 5 respectively comprise a first and a second helical section 40, 50, each of which extends in the heating chamber 20 around the axial direction A-A, in particular wrapping around the supply duct 3.

With reference to figures 4a and 4b, it can be noted that the first helical section 40 is arranged between the first inlet I1 and the first outlet U1 along the first path P1, while the second helical section 50 is arranged between the second inlet I2 and the second outlet U2 along the second path P2.

The first and second helical section 40, 50, extending around the axial direction A-A, respectively create a plurality of first coils 41 and second coils 51 surrounding the supply duct 3.

In detail, the second helical section 50 is coaxial with the first helical section 40 and, in particular, the first and second coils 41, 51 are alternated along the axial direction A-A. This means that, by having the supply chamber slide along the axial direction A-A, the first and second coils 41, 51 meet in an alternated manner.

It should be noted that, in use, the first and second helical sections 40, 51, in particular the respective coils, are hit by the flow of the heating flow F3 that leaves the duct radially through the supply openings 30.

Preferably, each supply opening 30 faces a respective group of first and second coils 41, 51 on which the heating jet F3a is dispensed.

If the heating flow F3 is a flow of water vapour, the heating of the first and second flows F1, F2 flowing in the respective tubular circuits 4, 5 takes place as a result of the condensation of the vapour on the first and second coils 41, 51 and due to the subsequent transfer by conduction of heat to the fluids flowing therein.

According to one aspect, the first and second tubular circuit 4, 5 - or, at least, the respective first and second helical sections 40, 50 - are made of thermally conductive materials such as, for example, stainless steel.

In general, the choice of the construction materials of the first and second tubular circuits 4, 5 depends on the fluids flowing in them and that must be heated. The selection of materials is carried out in such a way as to obtain the highest possible energy efficiency and guarantee a final product with a high organoleptic profile. In this regard, it should be noted that the choice of a material with a thermal conductivity that is too high for the fluid flowing in it could generate a smell of burning or caramel in the heated fluid or, in the case of frothed fluids, to have a low gloss and compact frothing.

Preferably, the first and the second tubular circuit 4, 5 - or, at least, the respective helical sections 40, 50 - are made of material characterized by a different thermal conductivity, so as to be optimized according to the fluids that, in use, flow therein.

If the heating flow F3 is a flow of water vapour, it is noted that the heat necessary for heating the first and second fluid flows F1, F2 is proportional to the amount of vapour condensed on the first and second coils 41, 51 which depends on their positioning within the heating chamber 20, in particular both on their mutual arrangement and on their positioning with respect to the supply duct 3. The thermal efficiency of the heating device is therefore significantly influenced by the arrangement of the helical sections 40, 50 of the first and second tubular circuits 4, 5 inside the heating chamber 20.

In the embodiment of Figure 3a, in order to obtain heating devices with good thermal efficiencies, the first coils 41 are interposed between the second coils 51 and the supply duct 3 along a radial direction R-R directed radially to the axial direction A-A.

Again with reference to the embodiment of Figure 3a, it is therefore noted that the second coils 51 are interposed between the main body 3 - in particular, the hollow tubular body 21 - and the first coils 41 along the radial direction R-R.

In particular, according to an aspect shown in Figure 3c, the second coils 51 are spaced from the first coils 41 along the radial direction R-R, preferably by a distance D comprised between 1 mm and 2 mm.

Through experimental tests, the Applicant has verified that, by accommodating the first and second helical sections 40, 50 the one into the other while keeping the respective coils 41, 51 spaced at a distance comprised between 1-2 mm along the radial direction R-R, the condensation energy of the vapour on the global system, composed of the first and second tubular circuits 4, 5, is equal to the sum of the condensation energies that would occur if the condensation of the vapour took place in two identical heating chambers 20 each provided with its own tubular circuit 4, 5. With such an arrangement, that is, the first and second tubular circuits 4, 5 do not thermally interfere with each other and, therefore, do not alter the efficiency of the heating device and facilitate its management.

Furthermore, it has also been verified that by accommodating the first and second helical sections 40, 50 the one into the other while keeping the respective coils 41, 51 spaced at a distance comprised between 1-2 mm along the radial direction R-R, the heating power supplied to the heating chamber 20 by the supply duct is supplied in equal measure and simultaneously to both tubular circuits 4, 5.

With reference to the embodiment shown in Figures 3c and 4a, it is noted that the distance D is calculated by taking as reference the outermost point of the first coils 41 and the innermost point of the second coils 51. In other words, according to one aspect, the distance D is the distance between a first cylinder (imaginary, not shown in the figures) in which the first coils 41 are inscribed, and a second cylinder (imaginary, not shown in the figures) inscribed by the second coils 51. Therefore, in the embodiment shown in Figures 3c and 4a, the distance D is equal to the difference between the innermost radius of the second coils 51 and the outermost radius of the first coils 41.

According to one embodiment, the first helical section 40 has an outer diameter comprised between 40 mm and 41 mm, while the second helical section 50 has an inner diameter comprised between 42 mm and 43 mm. The first and second diameters are identifiable with the diameters of the first and second cylinders, respectively.

With reference to the embodiment shown in Figure 3a, the second coils 51 are spaced from the adjacent first coils 41 along the axial direction A-A.

In particular, preferably, the first and second coils 41, 51 are not in direct contact so as not to thermally interfere by conduction.

In the embodiment shown in Figure 3a and 3b, the heating device 1 comprises a spacer 6 mounted on the first and second coils 41, 51 and configured to keep them spaced in accordance with the above.

The spacer 6 is preferably made of insulating material, so as to prevent it from acting as a thermal bridge between the first and second coils 41, 51.

According to one aspect, the spacer 6 extends parallel to the axial direction A-A in interposition between the first helical section 40 and the second helical section 50.

Preferably, the spacer 6 has an extension in the axial direction A-A equal to that of the helical sections 40, 50 of the first and second tubular circuits 4, 5 so as to be able to be interposed and hooked between all the first and second coils 41, 51. This allows an optimal control of the spacing of all the first and second coils 41, 51, to the advantage of the thermal efficiency of the heating device 1.

In detail, preferably, the spacer 6 extends along the radial direction R-R between an outer portion 6a provided with first grooves 61a in which respective first coils 41m are mounted and an inner portion 6b having second grooves 61b in which respective second coils 51 are mounted.

To maximize heat condensation, the first and second helical sections 40, 50 of the first and second tubular circuits extend in the axial direction A-A for a length preferably comprised between 700 mm and 1700 mm, in particular equal to 1000 mm.

The geometrical characteristics of the first and second helical sections 40, 50 depend on the type of fluid to be treated. For example, in the specific case of milk or vegetable beverages, the helical sections 40, 50 are defined by tubes having an internal diameter between 2mm and 3mm (preferably 2.5mm), and an external diameter between 2.5mm and 3.5mm (preferably 3mm).

The first helical section 40 preferably has a pitch comprised between 10 mm and 5 mm, and the second helical section 50 preferably has a pitch comprised between 10 mm and 5 mm. In the embodiment shown in the attached figures, the pitches of the first and second helical sections 40, 50 are equal and, in particular, equal to 7 mm.

Preferably, the first coils 41 are all geometrically equal to each other and the second coils 42 are all geometrically equal to each other. This means that, preferably, the first and second helical sections 40, 50 are helical tubular sections, i.e. the helical path along which they extend identifies a cylindrical surface.

Another object of the present invention is a machine 100 for dispensing hot beverages such as, for example, a traditional or super-automatic type coffee machine.

In particular, said machine 100 is configured to dispense, both simultaneously and individually, at least two hot beverages obtained from or identifiable with the first and second heated fluid flow F1, F2. Preferably, the machine 100 is configured to dispense milk of animal origin (whether it is then liquid or frothed) and a vegetable beverage, such as a soy beverage, an infusion or even simply water.

However, it should be specified that the machine 100 does not necessarily only dispense hot beverages but, if necessary, can also dispense cold or room temperature beverages (e.g. cold milk or cold infusions).

With reference to Figures 5a and 6a, the machine 100 comprises the heating device 1 described above, configured to heat the first and second fluid flows F1, F2 to obtain the aforesaid hot beverages.

The machine 100 further comprises a steam generation unit 101 configured to generate a heating flow F3 of water vapour and supply it to the heating device 1, in particular to its supply duct 3. The steam generation unit 101 is then placed in fluid communication with the supply duct 3 by means of a special vapour supply line 101a which, for example, is fluidically connected to the inlet shank 32 of the supply duct 3.

Preferably, the machine 100 comprises steam delivery valve means 101b configured to adjust the supply of the heating flow F3 to the supply duct 3. Said steam delivery valve means 101b comprise, for example, a proportional type solenoid valve configured to adjust the flow rate of the heating flow F3 or a solenoid valve driven by means of a succession of on/off commands according to a certain frequency.

Still with reference to Figures 5a and 6a, the machine 100 comprises first and second hydraulic lines 102, 103 configured to be placed in fluid communication respectively with first and second fluid sources S1, S2 and respectively provided with first and second dispensers E1, E2.

The first hydraulic line 102 is configured to convey the first fluid flow F1 from the first source S1 to the first dispenser E1, passing through the heating device 1 if the dispensing of a first hot beverage is required. Similarly to the first hydraulic line 102, the second hydraulic line 103 is configured to convey the second fluid flow F2 from the second source S2 to the second dispenser E2, passing through the heating device 1 if the dispensing of a second hot beverage is required.

The first source and the second source S1, S2 may be the same but are preferably different. For example, the first source S1 contains cow's milk to be supplied into the first hydraulic line 102 while the second source S2 contains a vegetable beverage to be supplied to the second hydraulic line 102.

According to one aspect, the first and second sources S1, S2 are two tanks adapted to contain a respective fluid. If the fluid requires to be stored at low temperatures, as in the case of cow's milk, the first and/or second sources S1, S2 may be cooled or generally configured to maintain the respective fluids at their optimal storage temperature.

If at least one of the two fluid flows F1, F2 is water, the respective source may also be the water mains.

The first hydraulic line 102 is fluidically connected with the first tubular circuit 4 of the heating device 1 to supply therein the first fluid flow F1 to be heated and withdrawn heated so as to then dispense it through the first dispenser E1. The first hydraulic line 102 then extends from the first source S1 to the first inlet I1 of the first tubular circuit 4 of the heating device 1 and from the first outlet U1 of the first tubular circuit 4 to the first dispenser E1. That is, the first hydraulic line 102 has a first supply section 102a extending from the first source S1 to the first inlet I1 of the first tubular circuit 4, and a first delivery section 102b extending from the first outlet U1 of the first tubular circuit 4 to the first dispenser E1.

The second hydraulic line 103 is fluidically connected with the second tubular circuit 5 of the heating device 1 to supply therein the second flow F2 to be heated and withdrawn heated so as to then dispense it through the second dispenser E2. The second hydraulic line 103 then extends from the second source S2 to the second inlet I2 of the second tubular circuit 5 of the heating device 1 and from the second outlet U2 of the second tubular circuit 5 to the second dispenser E2. That is, the second hydraulic line 103 has a second supply section 103a extending from the second source S2 to the second inlet I2 of the second tubular circuit 5, and a second delivery section 103b extending from the second outlet U2 of the second tubular circuit 5 to the second dispenser E2.

The first hydraulic line 102 comprises a first pump P1 configured to generate the first fluid flow F1 directed from the first source S1 to the first dispenser E1, while the second hydraulic line 103 comprises a second pump P2 configured to generate the second fluid flow F2 directed from the second source S2 to the second dispenser E2.

In the embodiments shown in Figures 5a and 6a, the first and second pumps P1, P2 are arranged on the respective hydraulic lines 102, 103 upstream of the heating device 1. That is, the first and second pumps P1, P2 are respectively arranged in the first and second supply section 102a, 103.

In order to also dispense cold or room temperature beverages, according to one aspect, the first and second hydraulic lines 102, 103 respectively have a first and second bypass duct B1, B2 fluid-dynamically connecting the respective pumps P1, P2 directly to the respective dispensers E1, E2, thus bypassing the heating device 1 (in particular the first and second tubular circuits 4, 5).

Furthermore, again in order to allow the dispensing of even cold or room temperature beverages, preferably, the first and the second hydraulic line 102, 103 comprise respectively first and second valve means V1, V2 arranged downstream of the respective pump P1, P2 and upstream of the heating device 1. The first valve means V1 are configured to selectively feed the first flow F1 to the first tubular circuit 4 of the heating device 1 or to the first bypass duct B 1, the second valve means V2 are instead configured to selectively feed the second flow F2 to the second tubular circuit 5 of the heating device 1 or to the second bypass duct B2.

Preferably, the first and second valve means V1, V2 have a rest position, in which they divert the respective fluid flows F1, F2 towards the heating device 1, and an actuated configuration, in which they divert the respective fluid flows F1, F2 towards the respective bypass conduits B1, B2. Thus, preferably, the valve means V1, V2 are actuated to divert the respective fluid flows F1, F2 in the respective bypass conduits B1, B2 as by default they send such flows into the first and second tubular circuits 4, 5.

However, it should be noted that not necessarily both hydraulic lines 102, 103 have bypass ducts with their respective valve means, in fact, it could also be that only one of these is provided therewith. In such a case, only one of the hydraulic lines 102, 103 will be able to dispense both hot beverages and cold beverages.

In the embodiments shown in Figures 5a and 6a, the machine 100 further comprises an air supply circuit 104 configured to be placed in fluid communication with a compressed air source S3 for supplying pressurized air in the first and second hydraulic lines 102, 103. The air supply circuit 104 is used to make the fluid flows two-phase (liquid/air) and, for example, is used to froth the milk.

According to one aspect, the air supply circuit 104 is provided with a first branch R1 connected to the first hydraulic line 102 upstream of the heating device 1, and a second branch R2 connected to the hydraulic line 103 upstream of the heating device 1. The first and second branches R1, R2 are respectively configured to supply pressurized air in the first and second hydraulic lines 102, 103.

Preferably, the first and second branches R1, R2 are connected to the first and second hydraulic lines 102, 103 upstream of the first and second pumps P1, P2, respectively.

According to a further aspect, the air supply circuit 104 is also provided with air delivery valve means V3 configured to selectively supply or not supply pressurized air from the compressed air source S3 to the first and/or second branch R1, R2.

In the embodiment of Figure 5a, the air delivery valve means V3 comprise a valve for each branch R1, R2 configured to individually adjust the flow of air supplied in the first and second hydraulic lines 102, 103.

In the embodiment of Figure 6a, the air delivery valve means V3 comprise a single valve arranged upstream of the first and second branches configured to simultaneously adjust the flow of air supplied in the first and second hydraulic lines.

In the embodiment of Figure 6a, the air delivery valve means V3 further comprise valves of the on/off type on each branch R1, R2.

The machine 100 may also comprise an electronic control unit (not shown in the figures) configured to control the operation of one or more of the following components with which it is placed in signal communication: steam generation unit 101, steam delivery valve means 101b, first pump P1, second pump P2, first valve means V1, second valve means V2, and air delivery valve means V3.

The machine 100 can also comprise input/output devices (e.g. touchscreen display) placed in signal communication with the electronic control unit to, for example, select the hot beverage(s) to be dispensed, show the progress of the dispensing process, modify the dispensing parameters.

The present invention also concerns a method for using the aforementioned machine 100 for simultaneously dispensing two hot beverages. In particular, the present invention concerns a method for the simultaneous dispensing of a first hot beverage at a first temperature T1 obtained from the first fluid flow F1, and of a second hot beverage at a second temperature T2 obtained from the second fluid flow F2, by means of the machine 100 described above. The second temperature T2 is less than or equal to the first temperature T1.

This method involves first of all operating the steam generation unit 101 to supply the heating flow F3 of water vapour to the supply duct 3 of the heating device 1. This results in a temperature rise in the heating chamber 20.

The heating flow F3 supplied to the heating device 1 is such as to heat the first fluid flow F1 having a first flow rate value Q1 to the first temperature T1. It should be specified that the person skilled in the art is able to independently determine the characteristics of the heating flow F3 (i.e. flow rate and temperature) that allow the first fluid flow of flow rate Q1 to perform the thermal jump necessary to bring it to the temperature T1 at the outlet of the heating device 1, in particular at the first outlet U1 of the first tubular circuit 4.

According to one aspect, in order to supply the heating flow F3 to the supply duct 3 of the heating device 1, the electronic machine control unit 100, after switching on the steam generation unit 101, generates a signal commanding to the steam delivery valve means 101b to open so that the heating flow F3 can flow from the steam generation unit 101 to the heating device 1 through the vapour supply line 101a.

In particular, preferably, the electronic machine control unit 100 adjusts the opening of the steam delivery valve means 101b so as to introduce into the heating device the vapour flow necessary to give the first fluid flow F1 of flow rate Q1 the thermal power necessary to bring it to the first temperature T1.

Simultaneously with or subsequent to the actuation of the steam generation unit 101, the method also provides for commanding the actuation of the first and second pumps P1, P2 to simultaneously generate the first flow F1 having the first flow rate value Q1 in the first hydraulic line 102, and the second fluid flow F2 having a second flow rate value Q2 in the second hydraulic line 103.

The second flow rate value Q2 is that flow rate value which allows the second fluid flow F2 to reach the second temperature T2 downstream of the heating device 1. That is, the second flow value Q2 is selected/adjusted so that the second fluid flow F2 performs in the heating device 1 the thermal jump required to reach the second temperature T2 downstream of the heating device 1, in particular at the second outlet U2 of the second tubular circuit 5.

The second flow rate value Q2 is greater than or equal to the first flow rate value Q1.

In particular, it should be specified that the second flow rate value Q2 is equal to the first flow rate value Q1 when the first and second temperatures T1, T2 are equal and the fluid flows F1, F2 are made with the same fluid.

According to an aspect, to drive the pumps, the control unit of the machine 100 generates a driving signal of the first P1 and simultaneously a driving signal of the second pump P2. The drive signal of the first pump P1 is such as to drive the first pump P1 at a level/intensity/operating rate such as to give the first fluid flow F1 the first flow rate value Q1, while the drive signal of the second pump P2 is such as to drive the second pump P2 at a level/intensity/operating rate such as to give the second fluid flow F2 the second flow rate value Q2.

Preferably, upstream of the generation of the drive signal of the second pump P2, the method provides for the step of calculating the second flow rate value Q2 and generating the drive signal of the second pump P2 which allows to impose the calculated second flow rate value Q2 on the second fluid flow F2.

In this latter regard, it should be specified that the drive signal of the second pump P2 that allows to impose the second flow rate value Q2 on the second fluid flow F2 (i.e. the selection of the level/intensity/operating rate of the second pump P2 to impose the second flow rate value Q2 on the second fluid flow F2) can be, for example, carried out by means of a mapping of the second pump P2 stored in the control unit and that correlates the delivered flow rate as a function of the desired temperature (i.e. the second temperature T2 at which the second hot beverage must be dispensed). This mapping can be obtained experimentally by setting the target temperature to which the second fluid flow is to be brought and by calculating the flow rate necessary to obtain the target temperature.

Alternatively, the drive signal of the second pump P2 that allows to impose the second flow rate value Q2 on the second fluid flow F2 can be identified by means of real-time detection of the temperature of the second fluid flow F2 downstream of the heating device 1 in the second hydraulic line 103. In particular, preferably, the drive command of the second pump P2 is adjusted in real time during dispensing based on a feedback control on the temperature values of the second fluid flow F2 downstream of the heating device 1 in the second hydraulic line 103. To this end, the machine 100 preferably comprises a temperature sensor (not shown in the attached figures) configured to detect the temperature of the second fluid flow F2 and arranged in the second hydraulic line 5 downstream of the heating device 1, i.e downstream of the second outlet U2.

It should be noted that the person skilled in the art is able to calculate the second flow value Q2 through known thermodynamic correlations or, possibly, through routine experimental activities; therefore, this will not be described further.

If the creation of an air/liquid mixture is required - as, for example, in the case of the frothed milk being dispensed - together with the operation of the first and second pumps P1, P2, the electronic control unit of the machine 100 generates a drive signal of the air supply valve means V3 to supply pressurized air from the compressed air source S3 to the first and/or second hydraulic line 102, 103 depending on which line the two-phase fluid must be supplied from.

Preferably, the electronic machine control unit 100 is configured to generate a drive and adjustment signal of the air delivery valve means V3 to supply a predetermined flow rate of pressurized air from the compressed air source S3 to the first and/or second hydraulic line 102, 103 depending on which line the two-phase fluid is to be delivered from.

If the dispensing of a single hot beverage is required, it is possible to halve the dispensing times by providing sources S1, S2 of the same fluid and performing the method described above. In doing so, the machine will simultaneously dispense two equal hot beverages having the same flow rate, thus halving the dispensing times.

Clearly, in order to satisfy contingent and specific needs, a person skilled in the art may make numerous modifications and variants to the configurations described above. Such modifications and variations are all also contained within the scope of protection of the invention, as defined by the following claims.

## Claims

1. Heating device (1) for a machine (100) for dispensing hot beverages, configured to heat a first fluid flow (F1) and a second fluid flow (F2) which is distinct from the first fluid flow (F1), said heating device (1) comprising:
- a main body (2) defining a heating chamber (20);
- a supply duct (3) extending in the heating chamber (20) along an axial direction (A-A) and having a plurality of supply openings (30) distributed along the axial direction (A-A), the supply duct (3) being configured to supply in the heating chamber (20) a heating flow (F3) radially to the axial direction (A-A) through the supply openings (30);
- a first tubular circuit (4), configured to convey the first fluid flow (F1) to be heated, having a first helical section (40) extending in the heating chamber (20) around the axial direction (A-A) creating first coils (41) surrounding the supply duct (3);
**characterized in that it comprises** a second tubular circuit (5), configured to convey the second fluid flow (F2) to be heated, provided with a second helical section (50) extending in the heating chamber (20) around the axial direction (A-A) creating second coils (51) surrounding the supply duct (3), the second helical section (50) being coaxial with the first helical section (40), the first coils (41) and the second coils (51) being alternated along the axial direction (A-A).

2. Heating device (1) according to claim 1, wherein the first coils (41) are interposed between the second coils (51) and the supply duct (3) along a radial direction (R-R) directed radially to the axial direction (A-A).

3. Heating device (1) according to claim 2, wherein the second coils (51) are spaced from the first coils (41) along the radial direction (R-R).

4. Heating device (1) according to claim 3, wherein the second coils (51) are spaced from the first coils (41) by a distance (D) comprised between 1mm and 2mm.

5. Heating device (1) according to any one of the preceding claims, wherein the second coils (51) are spaced from the adjacent first coils (41) along the axial direction (A-A).

6. Heating device (1) according to any one of the preceding claims, comprising a spacer (6) mounted on the first coils (41) and on the second coils (51) and configured to keep said first coils (41) and second coils (51) spaced apart.

7. Heating device (1) according to claim 6, wherein:
- the spacer (6) extends parallel to the axial direction (A-A) in interposition between the first helical section (40) and the second helical section (50),
- the spacer (6) has:
- an outer portion (6a) having first grooves (61a) in which respective first coils (41) are mounted;
- an inner portion (6b) having second grooves (61b) in which respective second coils (51) are mounted.

8. Heating device (1) according to any one of the preceding claims, wherein the first tubular circuit (4) and the second tubular circuit (5) are made of materials **characterized by** a different thermal conductivity.

9. Machine (100) for dispensing hot beverages configured to dispense a first fluid flow (F1) and a second fluid flow (F2), said machine (1) comprising:
- a heating device (1) according to any one of the preceding claims;
- a steam generation unit (101) configured to supply a heating flow (F3) of water vapour to the supply duct (3) of the heating device (1);
- a first hydraulic line (102) configured to be placed in fluid-dynamic communication with a first source (S1), fluid-dynamically connected with the first tubular circuit (4) of the heating device (1), and having a first dispensing nozzle (E1), said first hydraulic line (102) comprising a first pump (P1) configured to generate the first fluid flow (F1) directed from the first source (S1) to the first dispensing nozzle (E1);
- a second hydraulic line (103) configured to be placed in fluid-dynamic communication with a second source (S2), fluid-dynamically connected with the second tubular circuit (5) of the heating device (1), and provided with a second dispensing nozzle (E2), said second hydraulic line (103) comprising a second pump (P2) configured to generate the second fluid flow (F2) directed from the second source (S2) to the second dispensing nozzle (E2).

10. Machine (100) according to claim 9, wherein:
- the first hydraulic line (102) has a first bypass duct (B1) fluid-dynamically connecting the first pump (P1) directly to the first dispensing nozzle (E1) bypassing the heating device (1), the first hydraulic line (102) comprising first valve means (V1) arranged downstream of the first pump (P1) and upstream of the heating device (1) configured to selectively feed the first fluid flow (F1) to the first tubular circuit (4) of the heating device (1) or to the first bypass duct (B1); and/or
- the second hydraulic line (103) has a second bypass duct (B2) fluid-dynamically connecting the second pump (P2) directly to the second dispensing nozzle (E2) bypassing the heating device (1), the second hydraulic line (103) comprising second valve means (V2) arranged downstream of the second pump (P2) and upstream of the heating device (1) configured to selectively feed the second fluid flow (F2) to the second tubular circuit (5) of the heating device (1) or to the second bypass duct (B2).

11. Machine (100) according to claim 9 or 10, comprising an air supply circuit (104) configured to be placed in fluid communication with a compressed air source (S3) and having:
- a first branch (R1) connected to the first hydraulic line (102) upstream of the heating device (1) and configured to supply pressurized air in the first hydraulic line (102);
- a second branch (R2) connected to the second hydraulic line (103) upstream of the heating device (1) and configured to supply pressurized air in the second hydraulic line (103);
- air delivery valve means (V3) configured to selectively supply or not supply pressurized air from the compressed air source (S3) to the first branch (R1) and/or to the second branch (R2).

12. Method for simultaneously dispensing:
- a first hot beverage at a first temperature (T1) obtained by heating a first fluid flow (F1); and
- a second hot beverage at a second temperature (T2), equal to or less than the first temperature (T1), obtained by heating a second fluid flow (F2)
by means of a hot beverage dispensing machine (100) according to any one of claims 9 to 11, said method comprising the steps of:
- operating the steam generation unit (101) to supply a heating flow (F3) of water vapour to the supply duct (3) of the heating device (1), said heating flow (F3) being such as to heat the first fluid flow (F1) having a first flow rate value (Q1) to the first temperature (T1);
- actuating the first pump (P1) and the second pump (P2) to simultaneously generate the first fluid flow (F1) having the first flow rate value (Q1) in the first hydraulic line (102) and the second fluid flow (F2) having a second flow rate value (Q2) in the second hydraulic line (103),
wherein the second flow rate value (Q2) is selected so that the second fluid flow (F2) is brought to the second temperature (T2) downstream of the heating device (1), the second flow rate value (Q2) being greater than or equal to the first flow rate value (Q1).

13. Method (100) according to claim 12, wherein the drive command of the second pump (P2) is adjusted during dispensing based on a feedback control on the temperature values of the second fluid flow (F2) downstream of the heating device (1) in the second hydraulic line (103).
